# EUROPÄISCHE PATENTSCHRIFT

(11) **EP 3 449 730 B1**
(45) Veröffentlichungstag und Bekanntmachung des Hinweises auf die Patenterteilung: **27.05.2020**
(21) Anmeldenummer: 18192083.6
(22) Anmeldetag: 31.08.2018
(51) Int. Cl.: A22C 11/10, A22C 11/02

(54) **VORRICHTUNG ZUM ABTEILEN VON SCHLAUCHFÖRMIGEN HÜLLEN**
DEVICE FOR DIVIDING TUBULAR CASINGS
DISPOSITIF DE SÉPARATION DES MANCHONS TUBULAIRES

(30) Priorität: 31.08.2017 DE 102017120101
(43) Veröffentlichungstag der Anmeldung: 06.03.2019
(73) Patentinhaber: VEMAG Maschinenbau GmbH, 27283 Verden/Aller (DE)
(72) Erfinder: Mach, Matthias, 30539 Hannover (DE); Hagedorn, Jan-Nils, 27283 Verden (DE); Matthies, Heiner, 27419 Kalbe (DE); Grote, Olaf, 27324 Eystrup (DE); Lewin, Alexander, 27283 Verden (DE)
(74) Vertreter: Eisenführ Speiser

(56) Entgegenhaltungen:
- EP-A2- 0 868 852
- WO-A1-96/41539
- DE-A1- 10 115 466
- DE-A1- 19 629 047
- US-A- 5 788 563

## Beschreibung

Die Erfindung bezieht sich auf eine Vorrichtung zum Abteilen von schlauchförmigen Hüllen, nach dem Oberbegriff von Anspruch 1. Ferner betrifft die Erfindung auch eine Füllmaschine zum Herstellen von Würsten aus pastöser Masse, insbesondere aus Wurstbrät, mit einem Fülltrichter zum Aufnehmen der pastösen Masse, einer Förderpumpe zum Fördern der pastösen Masse und einer Füllvorrichtung zum Füllen von schlauchförmigen Hüllen mit einer pastösen Masse sowie eine Abteilvorrichtung.

Vorrichtungen zum Abteilen schlauchförmiger Hüllen werden in Verbindung mit Füllmaschinen zum Herstellen von in Strangabschnitte zu unterteilenden schlauchförmigen Hüllen, wie Wurststränge, verwendet. Die Vorrichtungen zum Abteilen, auch als Abteilvorrichtung bezeichnet, werden eingesetzt, um eine mit einer pastösen Masse, insbesondere mit einem Fleischprodukt, gefüllte Hülle mit konstantem Durchmesser in Abschnitte vorbestimmter Länge zu unterteilen. Das Abteilen der Strangabschnitte erfolgt beispielsweise, wie das Füllen der Hülle, bei sich kontinuierlich bewegender Hülle. Während des Abteilvorganges wird insbesondere eine Einschnürung in der gefüllten Hülle erzeugt und einer der Abschnitte der Hülle neben der Einschnürung um deren Längsachse verdreht, sodass im Bereich der Einschnürung eine Abdrehstelle gebildet wird. Um das Mitdrehen der Hülle des soeben abgeteilten Strangabschnittes zu vermeiden, wird die Hülle im Bereich der Abteil- bzw. Abdrehstelle so stark eingeschnürt, dass das Hüllmaterial im Bereich der Abteilstelle insoweit geklemmt wird, dass ein Mitdrehen behindert wird.

Die bekannten Vorrichtungen zum Abteilen weisen dazu zwei auf gegenüberliegenden Seiten der Hülle angeordnete, umlaufende Transportelemente auf. Die Transportelemente umfassen jeweils ein oder mehrere Abteilelemente, mit denen die Einschnürung zwischen den zu erzeugenden Strangabschnitten generiert und die Hülle kontrolliert geklemmt wird. Zwei Abteilelemente an den Transportelementen bilden jeweils ein Abteilelement-Paar. Ferner umfasst die Vorrichtung mindestens eine Antriebseinrichtung für die Transportelemente, welche die Transportelemente und die zumindest daran angeordneten Abteilelemente mit nahezu gleicherbleibender Geschwindigkeit während des Eingriffs der Abteilelemente mit der Hülle bewegen.

Aus EP 1 430 779 B1 ist zum Beispiel eine Vorrichtung zum Abteilen von schlauchförmigen Hüllen mit zwei Transportelementen bekannt. Entlang der Transportelemente sind in vorbestimmten Abständen mehrere Abteilelemente angeordnet, wobei zwischen zwei benachbarten Abteilelementen zudem Führungsteile für die zu fördernde schlauchförmige Hülle mit ihren Strangabschnitten vorgesehen sind. Die Länge der Strangabschnitte, welche am Ende einer fertigen Wurstlänge entsprechen, ist dabei abhängig vom Abstand zwischen einander benachbarten Abteilelementen an den Transportelementen. Es sind nur solche Wurstlängen herstellbar, die, bezogen auf die Gesamtlänge des Transportelementes, der ganzzahligen Teilung durch die Abteilelemente entsprechen. Ohne Modifikationen an bzw. einen Austausch der Transportelemente können die Wurstlängen während der Produktion nicht variiert werden. Dabei greifen insbesondere zwei Abteilelemente-Paare der Transportelemente gleichzeitig an der befüllten schlauchförmigen Hülle an.

Aus EP 1 902 622 B1 ist eine Abteilvorrichtung bekannt, die anstelle der festen Anordnung der Abteilelemente entlang des Transportelementes im Abstand zueinander veränderlich am Transportelement aufgenommene Abteilelemente vorsieht. Jedes Transportelement weist dazu mehrere unabhängig voneinander antreibbare Transportelemente mit jeweils entsprechend zugeordneten Abteilelemente-Paaren auf. Um unterschiedliche Wurstlängen herzustellen, sind die verschiedenen Transportelemente-Paare über verschiedene jeweils damit gekoppelte Antriebe mit entsprechend abgestimmten Geschwindigkeiten antreibbar. Dadurch können Strangabschnitte an der schlauchförmigen, mit einem Fleischerzeugnis gefüllten Hülle erzeugt werden, deren Längen variabel einstellbar sind. Die bekannte Vorrichtung zum Abteilen von Wurstabschnitten mit variabler Länge weist jedoch eine sehr komplexe Ausgestaltung auf und erfordert eine aufwendige Ansteuerung der verschiedenen Transportelemente-Paare an den Transportelementen. Zudem sind die Transportelemente-Paare durch die zu taktenden Antriebe hohen Beschleunigungen ausgesetzt, welche den üblicherweise kontinuierlich ablaufenden Herstellungsprozess schwer einstellbar und steuerbar machen.

DE 199 52 102 A1 oder US 6 439 990 B1 offenbaren jeweils Vorrichtungen zum Herstellen kettenähnlicher Lebensmittel. Die Vorrichtung weist ein Füllrohr oder Fülldüse auf, auf dem oder der eine geraffte Hülle angeordnet ist. Dem Füllrohr oder der Fülldüse ist eine Abteileinrichtung mit zwei Endlosketten nachgeschaltet, welche die gefüllte Hülle in untereinander verbundene Strangabschnitte unterteilt. Die Abteilelemente sind so an den Endlosketten angeordnet, dass immer nur ein Abteilelement einer Endloskette mit der Hülle zusammenwirkt und mit dem Abteilelement der anderen Endloskette ein Abteilelemente-paar bildet.

Ferner sind aus DE 101 15 466 A1, US 5 788 563 A oder WO 96/41539 A1 Abteilvorrichtung bekannt, welche zwei als Endlosketten ausgebildete Transportelemente mit zwei Kettenrädern aufweisen. Die Rotationsachsen der Kettenräder verlaufen so in einer Ebene, dass jedes Transportelement mit einem geraden Elementeabschnitt und zwei ihrer Umlenkbereiche der zu transportierenden Hülle zugeordnet ist.

Der Erfindung liegt daher die Aufgabe zugrunde, eine Vorrichtung zum Abteilen von schlauchförmigen Hüllen aufzuzeigen, mit der das Generieren von Strangabschnitten mit unterschiedlichen Längen auf vereinfachte Weise möglich ist.

Die Lösung der Aufgabe erfolgt bei einer Vorrichtung der vorbezeichneten Gattung mit den Merkmalen von Anspruch 1. Insbesondere weisen die Transportelemente zwei Umlenkelemente auf, wobei die Rotationsachsen der zwei Umlenkelemente für das jeweilige Transportelement in einer gemeinsamen Ebene verlaufen, und wobei die Ebene in einem Winkel geneigt zur Förderrichtung der schlauchförmigen Hüllen ausgerichtet ist, so dass die Transportelemente jeweils mit einem ihrer Umlenkbereiche der zu transportierenden Hülle zugeordnet sind. Im Produktionsprozess, also während des Befüllens der schlauchförmigen Hülle, auch bezeichnet als Darm oder Darmraupe, steht nur ein Abteilelemente-Paar im Eingriff mit der abzuteilenden Hülle und schnürt die Hülle kontrolliert ein. Währenddessen kann der sich in Förderrichtung vor der Abteilvorrichtung befindliche Abschnitt der gerade unmittelbar zu befüllenden Hülle, vorzugsweise mit Füllvorrichtung in Rotation versetzt und im Bereich der Einschnürung die Abdrehstelle erzeugt werden.

Der Erfindung liegt die Erkenntnis zugrunde, dass, aufgrund dessen nur ein einziges Abteilelemente-Paar an der Hülle angreift und sobald dieses Abteilelemente-Paar außer Eingriff von der Hülle gebracht wird, für eine vorbestimmte Zeitdauer eine Relativbewegung zwischen der schlauchförmigen Hülle und den Transportelementen möglich ist. Während die Abteilelemente der Transportelemente in Eingriff mit der Hülle sind, entspricht die Bewegungsgeschwindigkeit der Abteilelemente an den Transportelementen der Fördergeschwindigkeit der von der Füllvorrichtung abgeführten, befüllten Hülle. Nachdem das Abteilelemente-Paar nicht mehr die Hülle berührt, wird der erzeugte Strangabschnitt bevorzugt nur mittels der ebenfalls am Transportelement angeordneten Führungsteile in Position zwischen den gegenüberliegend angeordneten Transportelementen gehalten. Um die Länge des Strangabschnittes individuell anzupassen, ist es möglich, die Bewegungsgeschwindigkeit der Transportelemente und den Abteilelementen daran zu verändern. Somit kann die Länge der Strangabschnitte in vorbestimmten Grenzen angepasst werden. Eine strukturelle Modifikation der Transportelemente oder ein aufwendiges, individuelles Antreiben von unterschiedlichen Transportelemente-Paaren an einem Transportelement, die hohen Beschleunigungen, nämlich positiven wie auch negativen Beschleunigungen, zu unterziehen sind, kann damit vermieden werden.

In einer bevorzugten Ausgestaltung der erfindungsgemäßen Vorrichtung zum Abteilen ist die Antriebseinrichtung für die Transportelemente dazu eingerichtet, die Geschwindigkeit der Transportelemente mit dem Abteilelement zu variieren, wenn die Abteilelemente außer Eingriff von der Hülle sind bzw. in Eingriff mit und/oder außer Eingriff von der Hülle gebracht werden. Insbesondere in Abhängigkeit von der Anzahl der Abteilelemente an einem jeweiligen Transportelement und der Länge der jeweils mit den Transportelementen zu erzeugenden Strangabschnitte wird die Geschwindigkeit der Transportelemente mittels der damit gekoppelten Antriebseinrichtung angepasst. Dadurch kann entweder dasselbe Abteilelement am Transportelement wieder oder das darauffolgende Abteilelement am Transportelement an genau der Position mit der mit der pastösen Masse befüllten Hülle in Eingriff bzw. Kontakt gebracht werden. Die Hülle wird wiederum eingeschnürt und bevorzugt anschließend die Abdrehstelle erzeugt. In einer Ausführungsform der Erfindung erfolgt das Verändern der Geschwindigkeit, also das Beschleunigen und Abremsen, der Abteilelemente relativ zur Hülle auch im Eingriff mit der Hülle. Auch beim unmittelbaren Eintritt in (in Eingriffbringen) und/oder beim unmittelbaren Austritt aus (außer Eingriffbringen) der Hülle kann die Geschwindigkeit der Abteilelemente beispielsweise zum Unterstützen beim Bilden der Abdrehstelle verändert werden.

Vorzugsweise ist die Antriebseinrichtung für die Transportelemente dazu eingerichtet, die Geschwindigkeit der Transportelemente im Vergleich zur Fördergeschwindigkeit der schlauchförmigen Hülle zu beschleunigen oder zu verlangsamen. Durch das Beschleunigen, worunter vorliegend das Steigern der Geschwindigkeit am Transportelement zu verstehen ist, wird dasselbe bzw. das nachfolgende Abteilelement derart mit der schlauchförmigen Hülle in Kontakt gebracht, dass der erzeugte Strangabschnitt kürzer ist als der Gesamtumfang des Transportelementes mit nur einem Abteilelement bzw. der Abstand zwischen zwei benachbarten Abteilelementen am Transportelement. Durch das Verlangsamen der Geschwindigkeit des Transportelementes wird das Abteilelement derart in Kontakt mit der schlauchförmigen Hülle gebracht, dass die Länge des erzeugten Strangabschnittes größer ist als der Abstand zwischen zwei benachbarten Abteilelementen bzw. der Umfang des Transportelementes mit nur einem Abteilelement. Kurz vor dem Ineingriffbringen bzw. Wieder-Ineingriffbringen des Transportelementes ist die Geschwindigkeit des Transportelementes auf bzw. an die Fördergeschwindigkeit der befüllten schlauchförmigen Hülle anzupassen. Hülle und Transportelemente werden dann mit gleicher Geschwindigkeit bewegt.

Gemäß einer Weiterbildung der erfindungsgemäßen Vorrichtung sind die Transportelemente zu beiden Seiten der schlauchförmigen Hülle jeweils mit mindestens einer Antriebsrolle der Antriebseinrichtung für ein jeweiliges Transportelement gekoppelt. Die Antriebsrolle für jedes Transportelement, welche jeweils mit einer Antriebswelle drehfest verbunden ist, wird beispielsweise über ein Antriebsmittel, wie beispielsweise einen Elektromotor, angesteuert. Damit erfolgt ein synchroner Antrieb beider Transportelemente zueinander. Beide Abteilelemente an den Transportelementen behalten somit eine feste Ausrichtung zueinander bei. Ein Versatz der Abteilelemente zueinander kann vermieden werden. Anstelle einer Antriebsrolle, über die jedes Transportelement geführt wird, können auch Synchronscheiben verwendet werden.

Vorzugsweise werden gemäß einer Ausführungsform der Erfindung mindestens zwei Umlenkelemente für ein jeweiliges Transportelement verwendet, wobei wenigstens ein Umlenkelement als Antriebsrolle und das andere Umlenkelement als angetriebene Rolle ausgebildet ist. Vorzugsweise verlaufen die Rotationsachsen der Umlenkelemente an einem Transportelement bevorzugt parallel zueinander. Zudem verlaufen die Rotationsachsen der Umlenkelemente eines Transportelementes auch parallel zu den Rotationsachsen der Umlenkelemente des jeweils gegenüberliegend angeordneten Transportelementes. In einer bevorzugten Ausführungsform der Erfindung ist vorgesehen, dass die Rotationsachsen sämtlicher Umlenkelemente der Transportelemente im Wesentlichen vertikal oder in einem Winkel von etwa bis zu 35° geneigt zu einer horizontal verlaufenden Aufstandsfläche für die Abteilvorrichtung verlaufen. Die Rotationsachsen der Umlenkelemente sind dann vorzugsweise in einer Ebene um die Mittenachse der in Förderrichtung bewegten Hülle herum bis zu etwa 35 Grad geneigt.

Erfindungsgemäß sind die Transportelemente jeweils mit einem ihrer Umlenkbereiche der zu transportierenden Hülle zugeordnet. Bevorzugt sind die Transportelemente zu beiden Seiten der gefüllten Hülle nur mit einem Umlenkbereich des Transportelements benachbart zur Hülle angeordnet. Die erfindungsgemäße Abteilvorrichtung gelangt somit nur über die Umlenkbereiche der erfindungsgemäß angeordneten Transportelemente mit der befüllten Hülle in Kontakt. Vorzugsweise verlaufen die Rotationsachsen der zwei Umlenkelemente für das Transportelement parallel in einer gemeinsamen Ebene, wobei diese Ebene in einem Winkel geneigt zur Längsachse der Hülle ausgerichtet ist. Das Transportelement kann gemäß einer Ausführung mit zumindest einem geradlinig verlaufenden Abschnitt des Transportelementes schräg oder quer zur Hülle verlaufen. Bevorzugt verläuft die Ebene quer zur Förderrichtung der schlauchförmigen Hülle. Beide Ebenen in denen die Transportelemente zu beiden Seiten der Hülle verlaufen sind vorzugsweise spiegelsymmetrisch zur Mittenachse der befüllten Hülle angeordnet.

In einer Ausführungsform der Erfindung ist an den Transportelementen jeweils nur ein Abteilelement vorgesehen, wobei der verbleibende Umfang des umlaufenden Transportelementes mit Hilfe von Führungsteilen aufgefüllt bzw. ausgebildet ist. In einer anderen Ausführungsform sind mehrere Abteilelemente bevorzugt gleichmäßig verteilt entlang des Umfanges angeordnet. Zwischen den in einem jeweiligen Abstand zueinander angeordneten Abteilelementen sind jeweils mehrere Führungsteile angeordnet, mit denen ein abzuteilender bzw. bereits abgeteilter Strangabschnitt der schlauchförmigen Hülle in Förderrichtung weitergeführt wird.

Gemäß einer alternativen, nicht erfindungsgemäßen Ausführungsform ist vorgesehen, dass die Transportelemente in ihren Umlenkbereichen oder mit zumindest einem Elementeabschnitt entlang einer im Wesentlichen parallel zur Hülle verlaufenden Bewegungsbahn geführt sind. Bevorzugt weist jedes Transportelement einen Elementeabschnitt auf, der parallel zur Hülle und bevorzugt parallel zum gegenüberliegenden Abschnitt des anderen Transportelementes ausgerichtet ist. Ein entlang dieses Abschnittes des Transportelementes geführtes Abteilelement hat nach Ineingriffbringen mit der schlauchförmigen Hülle und dem gegenüberliegend angeordneten Abteilelement des anderen Transportelementes, beide bilden ein Abteilelemente-Paar, eine vorbestimmte Verweildauer mit der Hülle. Dieser Abschnitt, entlang dessen das Abteilelemente-Paar in Kontakt mit der Hülle geführt wird bzw. sich bewegt, ist jedoch kürzer als der zu erzeugende Strangabschnitt an der schlauchförmigen Hülle. In einer bevorzugten Ausführungsform entspricht der Elementeabschnitt, entlang dessen das Abteilelement an der Hülle geführt wird, weniger als zwei Drittel der Gesamtlänge des zu erzeugenden Strangabschnittes. In einer anderen Ausgestaltung entspricht der Elementeabschnitt weniger als der Hälfte, besonders bevorzugt weniger als einem Drittel der Gesamtlänge des zu erzeugenden Strangabschnittes.

Jedes der zu beiden Seiten der schlauchförmigen Hülle angeordneten, umlaufenden Transportelemente weist mindestens zwei Umlenkelemente auf, die vorzugsweise im gleichen Abstand zu der durch die schlauchförmige Hülle gebildeten Mittenachse angeordnet sind. Ein derartig erfindungsgemäß ausgebildetes Transportelement weist wenigstens zwei, bevorzugt drei Umlenkbereiche auf, wobei jedes Transportelement in einem Umlenkbereich über ein entsprechendes Umlenkelement geführt wird. Ein Transportelement mit drei Umlenkbereichen weist vorzugsweise ein parallel zur Hülle verlaufenden Elementeabschnitt und zwei im Winkel geneigt zur Längsachse der gefüllten Hülle verlaufende Elementeabschnitte auf. Von den winklig verlaufenden Elementeabschnitten verlaufen entweder beide Elementeabschnitte schräg, d.h. in einem Winkel von etwa 10° bis 89°, zur Hülle oder ein Elementeabschnitt verläuft schräg und der andere Elementeabschnitt verläuft quer zur Längsachse der Hülle. Die Rotationsachsen der drei Umlenkelemente sind zueinander zumindest parallel ausgerichtet.

Gemäß einer bevorzugten Ausführungsform der erfindungsgemäßen Vorrichtung ist eine mit der Antriebseinrichtung signalleitend verbundene Steuereinrichtung vorgesehen, welche dazu eingerichtet ist, die Antriebseinrichtung in Abhängigkeit der Länge der zu erzeugenden Strangabschnitte an der Hülle anzusteuern. Mit Hilfe der Steuereinrichtung wird die Antriebsgeschwindigkeit der die Transportelemente antreibenden Antriebseinrichtung taktweise erhöht und/oder verringert. Über die Steuereinrichtung ist das Ändern der Länge der Strangabschnitte der herzustellenden Würste während eines laufenden Befüllvorganges einer durch eine Füllvorrichtung zu befüllenden schlauchförmigen Hülle möglich. Dadurch ist ein Produktwechsel ohne aufwendiges Umrüsten bzw. Modifizieren der Abteilvorrichtung bewirkt.

Bevorzugt sind an den Transportelementen eine Vielzahl an Führungsteilen benachbart zwischen zwei Abteilelementen oder benachbart neben einem Abteilelement am Transportelement angeordnet. Mit Hilfe der Führungsteile zwischen zwei Abteilelementen bzw. benachbart zu einem Abteilelement wird die mittels einer der Abteilvorrichtung vorgeschalteten Fülleinrichtung erzeugte befüllte Hülle kontrolliert geführt und beispielsweise einer nachfolgenden Weiterverarbeitungsvorrichtung zugeführt. Mit den Führungsteilen wird der zu erzeugende bzw. bereits erzeugte Strangabschnitt in einer vorbestimmten axialen Ausrichtung zu einem Füllrohr der vorgeschalteten Füllvorrichtung gehalten. Bevorzugt weist jedes Führungsteil eine an die Kontur, insbesondere den Durchmesser, auch bezeichnet als Kaliber, angepasste Formgebung auf. Die Führungsteile weisen insbesondere eine halbkreis- bzw. rautenförmige Ausnehmung für die schlauchförmige Hülle auf. Zwei einander gegenüberliegend angeordnete Führungsteile der Transportelemente der erfindungsgemäßen Abteilvorrichtung bilden vorzugsweise einen etwa kreisförmigen freien Querschnitt aus. Die Führungsteile sind jedoch dazu eingerichtet, die schlauchförmige Hülle nicht zu klemmen bzw. zu quetschen, sodass das Transportelement mit seinen Führungsteilen eine Relativbewegung zu der bevorzugt kontinuierlich hergestellten befüllten schlauchförmigen Hülle ausführen kann.

Vorzugsweise weist das Transportelement ein Förderband oder eine Förderkette auf, an dem oder an der die Abteilelemente und/oder Führungsteile im Abstand zueinander angeordnet sind. Die Abteilelemente und/oder Führungsteile stehen bevorzugt senkrecht an der Außenseite des als Förderband bzw. Förderkette ausgebildeten Transportelementes ab. Das Förderband bzw. die Förderkette bildet vorliegend den Grundkörper für die daran angeordneten Abteilelemente und Führungsteile, welches insbesondere flexibel bzw. elastisch ist. Als Förderband kann beispielsweise auch ein Zahnriemen eingesetzt werden. Die insbesondere nach innen weisenden Zähne des Zahnriemens kämmen mit den korrespondierend ausgebildeten Umlenkelementen, wodurch bewirkt ist, dass die Transportelemente zur Antriebseinrichtung keinen Schlupf aufweisen. Damit ist eine exakte Ansteuerung der Transportelemente und der damit verbundenen Herstellung der Strangabschnitte an der schlauchförmigen Hülle gewährleistet. Bevorzugt werden die Transportelemente auf den gegenüberliegenden Seiten der zu erzeugenden befüllten, schlauchförmigen Hülle gegenläufig bzw. gegensinnig angetrieben.

Gemäß einer bevorzugten Weiterbildung der erfindungsgemäßen Abteilvorrichtung sind die Abteilelemente und/oder Führungsteile an den Transportelementen reversibel koppelbar befestigt. Dadurch ist es möglich, insbesondere die Abteilelemente in einem vorbestimmten Abstand zueinander entlang des Transportelementes anzuordnen. Dadurch kann im Bedarfsfall die Grundeinstellung des Abstandes zwischen den Abteilelementen zueinander auf die zu erzeugenden Strangabschnitte an der mit der pastösen Masse befüllten schlauchförmigen Hülle abgestimmt werden. Unter einer reversibel koppelbaren Verbindung zwischen den Abteilelementen bzw. den Führungsteilen und dem Transportelement ist vorliegend zu verstehen, dass die Abteilelemente und/oder Führungsteile beliebig oft an den Transportelementen montiert und auch entsprechend wieder abgenommen bzw. entfernt werden können.

In einer Ausführungsform der Erfindung werden die Abteilelemente und/oder Führungsteile über eine formschlüssige Verbindung an den Transportelementen gekoppelt, was das Koppeln bzw. Verbinden und auch das Entkoppeln bzw. Lösen der Führungsteile und/oder Abteilelemente am Transportelement vereinfacht. Die Abteilelemente bzw. Führungsteile und das Transportelement weisen vorzugsweise miteinander in Wirkverbindung bringbare bzw. korrespondierende Verrastteile oder -elemente auf. Mittels der Verrastteile oder -elemente wird bevorzugt eine Art Schnappverbindung ausgebildet.

Vorzugsweise weisen die Abteilelemente eines miteinander zusammenwirkenden Abteilelemente-Paares der aufeinander gegenüberliegenden Seiten der schlauchförmigen Hülle angeordneten Transportelemente zusammenwirkende Abteilabschnitte auf, die verschränkt zueinander angeordnet sind. Die bevorzugt im Wesentlichen senkrecht zum Transportelement abstehenden Abteilelemente eines zusammenwirkenden Abteilelemente-Paares haben jeweils Abteilabschnitte, die unter einem Winkel geneigt zur Vertikalen ausgerichtet sind. Die Abteilabschnitte beider Abteilelemente verlaufen insbesondere in einem Winkel von vorzugsweise 20° bis 90° zueinander. Die Abteilelemente greifen mit ihren Abteilabschnitten insbesondere so ineinander, dass in Förderrichtung gesehen Bereiche der Abteilabschnitte einander überdecken, ohne sich jedoch dabei unmittelbar zu berühren. Insbesondere im Kreuzungspunkt der Abteilabschnitte bilden diese einen freien Querschnitt für die zwar einzuschnürende aber nicht zu beschädigende Hülle des Wurststranges aus einer Vielzahl von hintereinander angeordneten Strangabschnitten aus.

Gemäß einer weiteren Ausgestaltung der erfindungsgemäßen Abteilvorrichtung ist mindestens eine dem Transportelemente-Paar nachgeschaltete Fördereinrichtung mit zwei Förderelementen vorgesehen. Mit Hilfe der dem Transportelemente-Paar in Förderrichtung nachgeordneten Fördereinrichtung werden die erzeugten Strangabschnitte des kontinuierlich hergestellten Wurststranges übernommen und an eine Weiterverarbeitungsvorrichtung, beispielsweise eine Abtrenneinrichtung oder eine Sortier- und/oder Verpackungsstation übergeben. Die erfindungsgemäße Abteilvorrichtung kann bevorzugt Bestandteil einer Produktionslinie zum Herstellen von vereinzelten Würsten sein. Die Förderelemente der Fördereinrichtung sind in einer Ausführungsform der Erfindung als umlaufende Förderbänder ausgebildet. Die Förderelemente der Fördereinrichtung sind in einem vorbestimmten Abstand zueinander angeordnet, zwischen dem die hergestellten und bevorzugt noch untereinander verbundenen Strangabschnitte abgefördert werden. Der Abstand zwischen den Förderelementen sowie zwischen den Transportelementen ist bevorzugt einstell- bzw. veränderbar, wodurch eine Anpassung an verschiedene Durchmesser bzw. Kaliber der herzustellenden Wurstränge möglich ist.

Ein weiterer Aspekt der Erfindung betrifft eine Maschine zum Herstellen von Würsten aus pastöser Masse, insbesondere aus Fleischbrät, mit einem Fülltrichter zum Aufnehmen der pastösen Masse, einer Förderpumpe zum Fördern der pastösen Masse und einer Füllvorrichtung zum Füllen von schlauchförmigen Hüllen mit einer pastösen Masse, insbesondere von Darmraupen mit Wurstbrät, und einer Vorrichtung zum Abteilen von schlauchförmigen, mit der pastösen Masse gefüllten Hüllen nach einer der vorstehend beschriebenen bevorzugten Ausführungsformen.

An einer Maschine zum Herstellen von Würsten mit einer derartig erfindungsgemäß ausgebildeten Vorrichtung zum Abteilen bzw. Abteilvorrichtung lassen sich Wurststränge mit unterschiedlichen Längen herstellen, ohne die zum Abteilen der Strangabschnitte verwendeten Transportelemente der Abteilvorrichtung strukturell modifizieren bzw. umrüsten zu müssen. Damit ist eine vereinfachte Anpassung der erfindungsgemäßen Maschine an Produkte unterschiedlicher Länge erreicht. In einer Ausführungsform der Erfindung kann die erfindungsgemäße Maschine mittels der Abteilvorrichtung derart variabel verwendet werden, dass die Wurstlängen während eines laufenden Produktionsprozesses umgestellt bzw. verändert werden können. Das Anpassen ist zum Beispiel über eine signalleitend mit der Abteilvorrichtung verbundenen Steuereinrichtung möglich, welche in einer Ausführungsform der Erfindung Bestandteil der erfindungsgemäßen Maschine sein kann. Über die Steuereinrichtung erfolgt die zentrale Steuerung bzw. Einstellung bestimmter, die Maschine steuernder Prozesse wie beispielsweise das Einstellen der Fördergeschwindigkeit der in die schlauchförmige Hülle einzubringenden pastösen Masse.

In einer Weiterbildung der erfindungsgemäßen Maschine ist zumindest vorzugsweise mindestens eine Darm-Beladeeinheit für die gerafften schlauchförmigen Hüllen, auch bezeichnet als Darmraupen, mit zwei relativ zueinander beweglich gehaltenen Greifelementen vorgesehen. Mit Hilfe der Darm-Beladeeinheit erfolgt ein automatisiertes Beladen der Füllvorrichtung, insbesondere eines Füllrohres an der Füllvorrichtung. Um die Därme gleichmäßig greifen zu können, sind die die gerafften Hüllen aufnehmenden Greifelemente vorzugsweise an mindestens einem Hebelelement drehbar gelagert oder über ein Hubgestänge parallel und linear in der Höhe zueinander veränderbar aufgenommen.

Vorteilhafte Ausführungsformen der Maschine zum Herstellen von Würsten sind den vorstehenden Ausführungen zur erfindungsgemäßen Abteilvorrichtung und deren bevorzugten Ausführungsformen zu entnehmen.

Nachfolgend wird die Erfindung anhand möglicher Ausführungsbeispiele unter Bezugnahme auf die nachfolgenden Figuren näher beschrieben. Hierbei zeigen:
- Fig. 1:: eine Vorderansicht einer Maschine zum Herstellen von Würsten mit einer erfindungsgemäßen Abteilvorrichtung;
- Fig. 2:: eine Draufsicht auf die Maschine nach Fig. 1;
- Fig. 3:: eine perspektivische Ansicht der Maschine mit ihrer erfindungsgemäßen Abteilvorrichtung;
- Fig. 4:: ein Ausschnitt der Maschine und der Abteilvorrichtung nach Fig. 3;
- Fig. 5 - 6b:: Ansichten eines ersten Ausführungsbeispiels einer erfindungsgemäßen Abteilvorrichtung; und
- Fig. 7 - 8b:: Ansichten eines zweiten Ausführungsbeispiels einer erfindungsgemäßen Abteilvorrichtung.

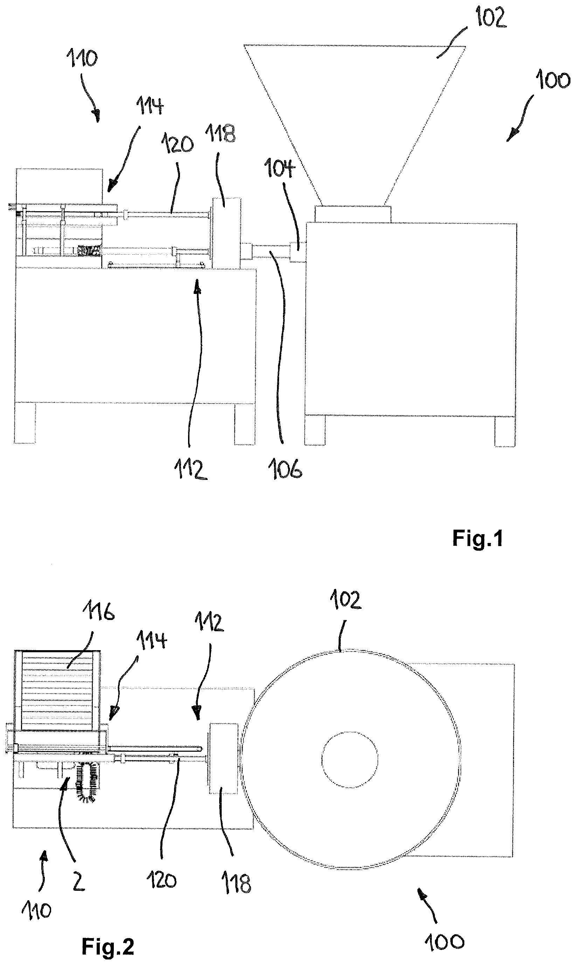

Die Fig. 1 und 2 zeigen eine Maschine 100 zum Füllen schlauchförmiger Hüllen, insbesondere von Kunst- oder Naturdärmen. Die Maschine 100 weist einen Fülltrichter 102 und einen Extrusionskopf 104 auf. Die Maschine 100 ist über ein Abgaberohr 106 mit einem Vorsatzgerät 110 gekoppelt. Über das Abgaberohr 106 erfolgt das Überleiten der pastösen Masse, insbesondere eines Fleischerzeugnisses, vom Extrusionskopf 104 zu einer Füllvorrichtung 112 am Vorsatzgerät 110. Das Vorsatzgerät 110 umfasst ferner eine Darm-Beladeeinheit 114, mit der die Füllvorrichtung 112 mit gerafften Hüllen 116 bestückt wird. Weiterhin ist am Vorsatzgerät 110 eine Abteilvorrichtung 2 angeordnet, mit Hilfe der eine an der Füllvorrichtung 112 erzeugte, mit der pastösen Masse gefüllte schlauchförmige Hülle 4 in Strangabschnitte 6 vorbestimmter Länge unterteilt wird.

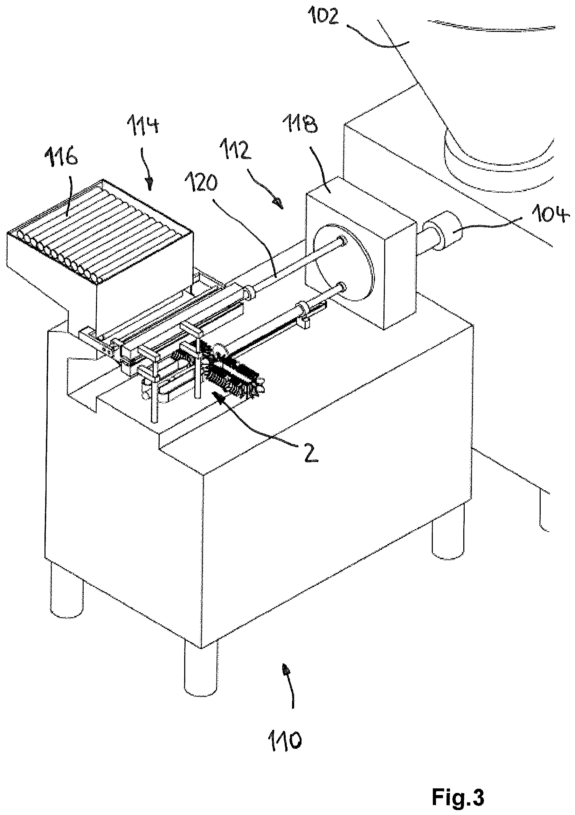

Fig. 3 zeigt das mit der Maschine 100 gekoppelte Vorsatzgerät 110 mit der Füllvorrichtung 112 zum Füllen von schlauchförmigen Hüllen 4. Die Hüllen werden in der gezeigten Ausführungsform mit einer aus einem Fleischerzeugnis hergestellten pastösen Masse gefüllt, um insbesondere Würstchen vorbestimmter Länge herzustellen. Die Füllvorrichtung 112 umfasst dazu einen als Revolvermagazin ausgebildeten Abdrehkopf 118 mit zwei daran angeordneten Füllrohren 120. Das Füllrohr 120 in der oberen Position wird über die Darm-Beladeeinheit 114 mit gerafften Hüllen 116 bestückt. Das sich in der unteren Position befindliche Füllrohr 120, auf dem die geraffte Hülle 116 aufgezogen ist, wird dann bevorzugt kontinuierlich mit dem aus der Maschine 100 zur Füllvorrichtung 112 übergeleiteten Fleischerzeugnis befüllt. Dem sich in der Befüllstellung befindlichen Füllrohr 118 ist in Längsrichtung hinter dem Füllrohr die Abteilvorrichtung 2 zugeordnet, von der die befüllte schlauchförmige Hülle unmittelbar nach dem Befüllen übernommen wird. Bevorzugt ist die Abteilvorrichtung 2 konzentrisch zur Längsachse des in der Befüllstellung stehenden Füllrohres 120 ausgerichtet.

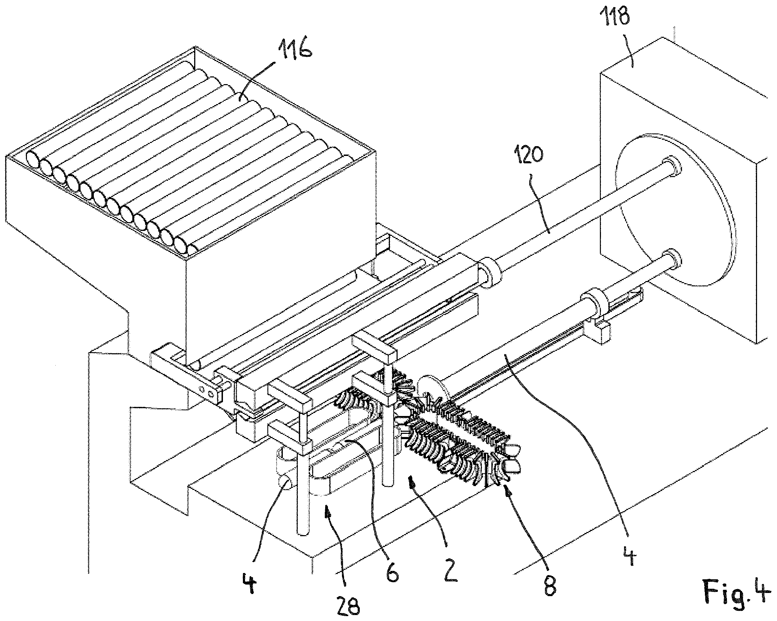

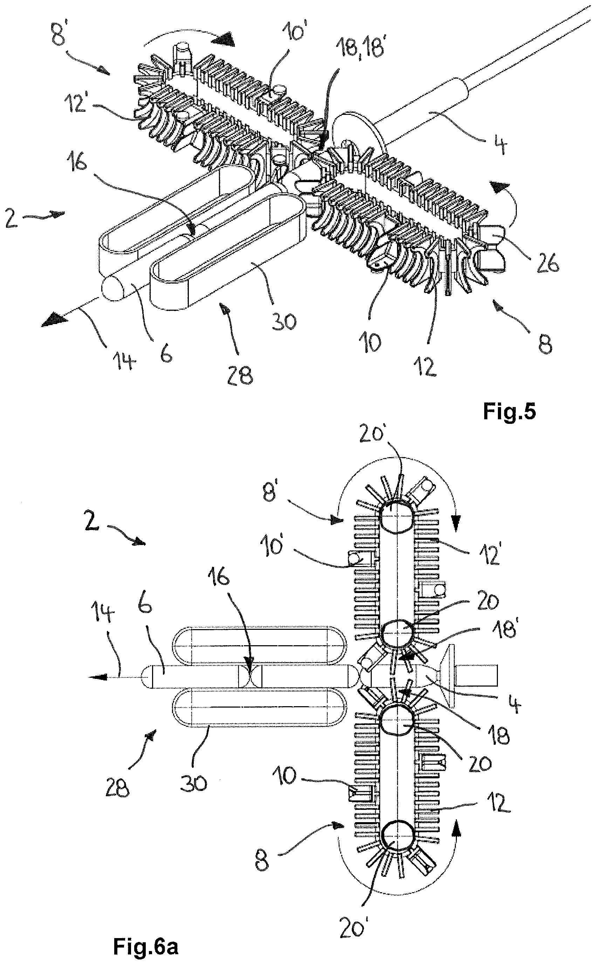

Wie aus dem in Fig. 4 gezeigten Ausschnitt der Fig. 3 ersichtlich, weist die Abteilvorrichtung 2 zwei auf gegenüberliegenden Seiten der mittels der Füllvorrichtung 112 erzeugten, befüllten Hülle 4 angeordnete, umlaufende Transportelemente 8, 8' auf. Diese weisen jeweils ein oder mehrere Abteilelemente 10, 10' und mehrere Führungsteile 12, 12' für die befüllte Hülle auf. Die Transportelemente 8, 8' der Abteilvorrichtung 2 werden über eine nicht näher dargestellte Antriebseinrichtung angetrieben, wobei die Transportelemente 8, 8' jeweils gegensinnig angetrieben bzw. bewegt werden. Damit erzeugen die auf gegenüberliegenden Seiten der Hülle angeordneten Transportelemente eine synchrone Förderbewegung Pfeil 14 (Fig. 5) der befüllten Hülle 4. Ferner ist mindestens eine dem Transportelemente-Paar 8, 8' nachgeschaltete Fördereinrichtung 28 mit zwei Förderelementen 30 vorgesehen.

Mittels der Abteilelemente 10, 10', wobei ein Abteilelement 10 am Transportelement 8 mit dem gegenüberliegenden Abteilelement 10' am Transportelement 8' so zueinander ausge richtet sind, dass diese miteinander zusammenwirken und eine Einschnürung 16 an der befüllten Hülle 4 erzeugen, ist jeweils ein Abteilelemente-Paar ausgebildet.

Fig. 5 zeigt ein erstes Ausführungsbeispiel der erfindungsgemäßen Vorrichtung 2 zum Abteilen von schlauchförmigen Hüllen 4. Dabei sind die Abteilelemente 10, 10' an den Transportelementen 8; 8' so angeordnet und ferner sind die Transportelemente 8; 8' derart entlang der befüllten und abzuteilenden Hülle 4 geführt, dass jeweils nur ein Abteilelemente-Paar gleichzeitig mit der Hülle 4 in Eingriff bringbar ist. Dadurch kann, wenn die Abteilelemente 10, 10' außer Eingriff von der Hülle 4 sind, die Geschwindigkeit der Transportelemente 8, 8' mit ihren Abteilelementen von der Antriebseinrichtung für die Transportelemente variieren werden. Die Führungsteile 12, 12' dienen vornehmlich zum Führen der befüllten Hülle 4, wobei die Führungsteile 12, 12' die Hülle weder klemmen noch in irgendeiner Art fixieren. Damit ist eine Relativbewegung zwischen den Transportelementen 8, 8' und der mit einer vorgegebenen, insbesondere unveränderbaren Geschwindigkeit geförderten, befüllten Hülle 4 möglich. Mit der Antriebseinrichtung für die Transportelemente 8, 8' wird deren Geschwindigkeit im Verhältnis zur Fördergeschwindigkeit der schlauchförmigen, befüllten Hülle 4, nachdem vorrangig keines der Abteilelemente 10, 10' mehr mit der Hülle in Kontakt oder in Eingriff steht, beschleunigt oder verlangsamt. In einer Ausführungsform der Erfindung ist mit den erfindungsgemäßen Abteilelementen 10, 10' auch das geringfügige Beschleunigen der Abteilelementen 10, 10' relativ zur Hülle 4 auch im Eingriff mit der Hülle 4 möglich. Dadurch wird diese zur Unterstützung der Bildung einer Abdrehstelle geringfügig in Förderrichtung gezogen.

Wie die Fig. 5 bis 6b verdeutlichen, sind in der vorliegenden Ausführungsform die Transportelemente 8, 8' jeweils nur mit einem Umlenkbereich der zu unterteilenden Hülle 4 zugeordnet. In dieser Ausführungsform kommt ein jeweiliges Abteilelemente-Paar nur kurzzeitig mit der Hülle in Kontakt bzw. in Eingriff, wobei der engste Kontakt zwischen dem Abteilelemente-Paar zur abzuteilenden Hülle 4, also dann, wenn die Abteilelemente im Wesentlichen senkrecht zur Hülle 4 stehen, im Scheitelpunkt der Umlenkbewegung des Transportelementes vorliegt. Um die Transportelemente 8, 8' an der in den Fig. 5 bis 6b gezeigten Hülle 4 entlang zu bewegen, sind die Transportelemente 8, 8' über wenigstens zwei Umlenkelemente 20, 20' geführt. Eines der Umlenkelemente ist als Antriebsrolle zum Antreiben eines jeweiligen Transportelementes 8, 8' ausgebildet.

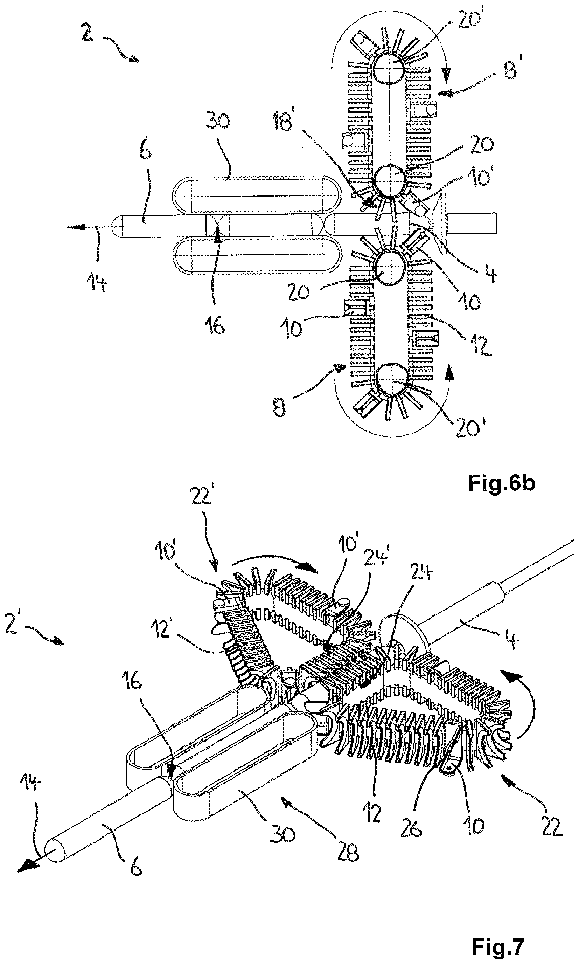

Die Fig. 6a und 6b zeigen verschiedene Stellungen der Abteilelemente 10, 10' am Transportelement 8, 8' und damit unterschiedliche Zeitpunkte während der Produktion der zu erzeugenden, abgeteilten Strangabschnitte 6 von der befüllten Hülle 4. Fig. 6a zeigt den Moment, in dem eines der an den Transportelementen 8, 8' angeordneten Abteilelemente-Paare aus den Abtrennelementen 10, 10' außer Eingriff von der Hülle 4 gebracht wird. Ab diesem Moment können, abhängig von der zu erzeugenden Länge des Strangabschnittes, die Transportelemente 8, 8' unabhängig von der Fördergeschwindigkeit der befüllten Hülle angetrieben werden. Fig. 6b zeigt den Moment, kurz bevor die nächsten Abteilelemente 10, 10' der Transportelemente 8, 8' mit der befüllten Hülle in Kontakt gebracht werden, wobei zu diesem Zeitpunkt die Geschwindigkeit der Transportelemente dann wieder an die Fördergeschwindigkeit der befüllten Hülle 4 angepasst wurde.

Fig. 7 zeigt eine weitere Ausführungsform der erfindungsgemäßen Abteilvorrichtung 2', welche im Gegensatz zum vorherigen Ausführungsbeispiel zwei Transportelemente 22, 22' aufweist, welche jeweils einen Elementeabschnitt 24, 24' haben, der im Wesentlichen parallel zur Förderrichtung der zu befüllenden Hülle 4 geführt ist. In dieser Ausführungsform wird somit jedes der an den Transportelementen 22, 22' angeordneten Abteilelemente 10, 10' und jedes Führungsteil 12, 12' über eine vorbestimmte Strecke bzw. einen Streckenabschnitt parallel zur Hülle 4 geführt. Die Abteilelemente 10, 10' und auch die Führungsteile 12, 12' sind an den Transportelementen 22, 22' wie auch an den Transportelementen 8, 8' (Fig. 5 - 6b) reversibel koppelbar angeordnet. Das bedeutet, dass die Abteilelemente 10, 10' im Abstand zueinander veränderlich an den Transportelementen 22, 22' sind. Dadurch ist die Grundeinstellung der Länge der mit den Transportelementen 22, 22' erzeugbaren Strangabschnitte 6 an der Hülle 4 möglich.

Das Anpassen der Geschwindigkeit der Antriebseinrichtung und der damit gekoppelten Transportelemente 22, 22' erfolgt über eine an der erfindungsgemäßen Abteilvorrichtung 2, 2' vorgesehene bzw. ausgebildete, aber nicht gezeigte Steuereinrichtung. Wie aus Fig. 7 ferner ersichtlich weisen die Abteilelemente 10, 10' Abteilabschnitte 26 auf, die in einem Winkel geneigt zur Vertikalen verlaufen. Insbesondere kann der Winkel zwischen 10° und 45° zur Vertikalen betragen. Die Abteilelemente 10, 10' an den Transportelementen 8, 8', 22, 22' weisen einen Abteilabschnitt 26 auf, der, wenn sich die Abteilelemente 10, 10' gegenüberstehen, also ein Abteilelemente-Paar ausbilden, in entgegengesetzte Richtung geneigt sind. Die Abteilabschnitte 26 an den Abteilelementen 10, 10' sind somit bevorzugt verschränkt zueinander angeordnet und wirken somit effektiv zusammen.

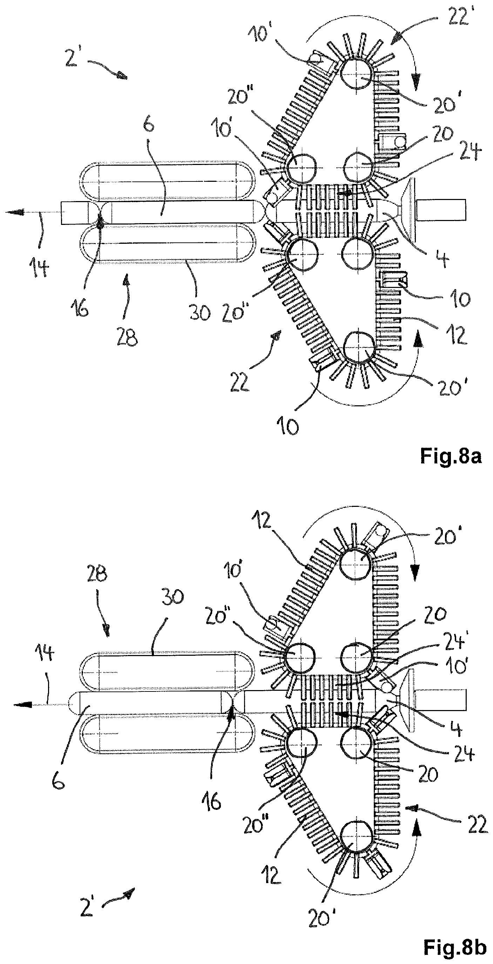

Auch in den Fig. 8a und 8b wird ersichtlich, dass jeweils nur ein Abteilelemente-Paar aus den Abteilelementen 10, 10' in Eingriff mit der Hülle 4 steht. Bevor das nächste Abteilelemente-Paar 10, 10' an den Transportelementen 22, 22' in Eingriff mit der Hülle gebracht wird, gibt es einen zeitlichen Moment, in dem ausschließlich nur Führungsteile 12, 12' an den Transportelementen in Kontakt bzw. Anlage mit der Hülle 4 stehen. Die Transportelemente 22, 22' der in den Fig. 8a und 8b gezeigten Ausführungsform der Abteilvorrichtung 2' werden über drei Umlenkelemente 20, 20', 20" geführt. Die Umlenkelemente 20, 20', 20" weisen in der gezeigten Ausführung parallel zueinander ausgerichtete Rotationsachsen auf. Wie aus den Figuren ferner ersichtlich verlaufen zwei Abschnitte der Transportelemente 22, 22' schräg und/oder quer zur Längsachse der befüllten Hülle 4.Mindestens eines der Umlenkelemente 20, 20', 20" ist bevorzugt als Antriebsrolle bzw. Antriebsscheibe ausgebildet. Die Antriebsrolle bzw. Antriebsscheibe wird von der Antriebseinrichtung angesteuert.

### Bezugszeichenliste

- 2, 2': Abteilvorrichtung
- 4: Hülle
- 6: Strangabschnitt
- 8, 8': Transportelement
- 10, 10': Abteilelement
- 12, 12': Führungsteil
- 14: Förderrichtung
- 16: Einschnürung
- 18, 18': Umlenkbereich
- 20, 20': Umlenkelement
- 22, 22': Transportelement
- 24, 24': Elementeabschnitt
- 26: Abteilabschnitt
- 28: Fördereinrichtung
- 100: Maschine
- 102: Fülltrichter
- 104: Extrusionskopf
- 106: Abgaberohr
- 110: Vorschaltgerät
- 112: Füllvorrichtung
- 114: Beladeeinheit
- 116: geraffte Hülle
- 118: Abdrehkopf
- 120: Füllrohr

## Patentansprüche

1. Vorrichtung zum Abteilen von schlauchförmigen Hüllen, welche mit einer pastösen Masse gefüllt sind, insbesondere einem mit Wurstbrät gefüllten Darm, mit
- zwei auf gegenüberliegenden Seiten der Hülle (4) angeordneten, umlaufenden Transportelementen (8, 8',), wobei die Transportelemente (8, 8',) jeweils ein oder mehrere Abteilelemente (10, 10') umfassen, und
- mindestens einer Antriebseinrichtung für die Transportelemente (8, 8',),
wobei die Abteilelemente an den Transportelementen (8, 8',) so angeordnet sind und die Transportelemente (8, 8',) derart entlang der Hülle (4) geführt sind, dass nur ein Abteilelemente-Paar gleichzeitig mit der Hülle (4) in Eingriff bringbar ist.
**dadurch gekennzeichnet,**
**dass** die Transportelemente (8, 8') zwei Umlenkelemente (20, 20') aufweisen, wobei die Rotationsachsen der zwei Umlenkelemente (20, 20') für das jeweilige Transportelement (8, 8') in einer gemeinsamen Ebene verlaufen, und
wobei die Ebene in einem Winkel geneigt zur Förderrichtung (14) der schlauchförmigen Hüllen ausgerichtet ist, sodass die Transportelemente (8, 8') jeweils mit nur einem ihrer Umlenkbereiche (18, 18') der zu transportierenden Hülle (4) zugeordnet sind.

2. Vorrichtung nach Anspruch 1,
**dadurch gekennzeichnet, dass** die Antriebseinrichtung für die Transportelemente (8, 8',22) dazu eingerichtet ist, die Geschwindigkeit der Transportelemente (8, 8',22) mit dem Abteilelement (10, 10') zu variieren, wenn die Abteilelemente (10, 10') Außereingriff von der Hülle sind bzw, in Eingriff mit und/oder außer Eingriff von der Hülle (4) gebracht werden.

3. Vorrichtung nach Anspruch 1 oder 2,
**dadurch gekennzeichnet, dass** die Antriebseinrichtung für die Transportelemente (8, 8',22) dazu eingerichtet ist, die Geschwindigkeit der Transportelemente (8, 8',22) im Verhältnis zur Fördergeschwindigkeit der schlauchförmigen Hülle zu beschleunigen oder zu verlangsamen.

4. Vorrichtung nach Anspruch 1 bis 3,
**dadurch gekennzeichnet, dass** die Transportelemente (8, 8',22) jeweils mit mindestens einer Antriebsrolle für ein jeweiliges Transportelement gekoppelt sind.

5. Vorrichtung nach Anspruch 1 bis 4,
**dadurch gekennzeichnet, dass** die Transportelemente (8, 8',) in ihren Umlenkbereichen entlang einer im Wesentlichen parallel zur Hülle (4) verlaufenden Bewegungsbahn geführt sind.

6. Vorrichtung nach Anspruch 1 bis 5,
**gekennzeichnet durch** eine mit der Antriebseinrichtung signalleitend verbundenen Steuereinrichtung, welche dazu eingerichtet ist, die Antriebseinrichtung in Abhängigkeit der Länge der zu erzeugenden Strangabschnitte (6) an der Hülle (4) anzusteuern.

7. Vorrichtung nach Anspruch 1 bis 6,
**dadurch gekennzeichnet, dass** an den Transportelementen (8, 8',22, 22') eine Vielzahl an Führungsteilen (12, 12') benachbart zwischen zwei Abteilelementen (10, 10') oder benachbart neben dem einen Abteilelement am Transportelement (8, 8', 22, 22') angeordnet sind.

8. Vorrichtung nach Anspruch 1 bis 7,
**dadurch gekennzeichnet, dass** das Transportelement (8, 8', 22, 22') ein Förderband oder eine Förderkette aufweist, an dem oder an der die Abteilelemente (10, 10') und/oder Führungsteile (12, 12') im Abstand zueinander angeordnet sind.

9. Vorrichtung nach Anspruch 1 bis 8,
**dadurch gekennzeichnet, dass** die Abteilelemente (10, 10') und/oder Führungsteile (12, 12') an den Transportelementen (8, 8', 22, 22') reversibel koppelbar befestigt sind.

10. Vorrichtung nach Anspruch 1 bis 9
**dadurch gekennzeichnet, dass** die Abteilelemente (10, 10') eines Abteilelemente-Paares Abteilabschnitte (26) aufweisen, die verschränkt zueinander angeordnet sind.

11. Vorrichtung nach Anspruch 1 bis 10,
**gekennzeichnet durch** mindestens eine dem Transportelemente-Paar nachgeschaltete Fördereinrichtung (28) mit zwei Förderelementen (30).

12. Maschine (100) zum Herstellen von Würstchen aus pastöser Masse, insbesondere aus Wurstbrät, mit
- einem Fülltrichter (102) zum Aufnehmen der pastösen Masse,
- einer Förderpumpe zum Fördern der pastösen Masse, und
- einer Füllvorrichtung (112) zum Füllen von schlauchförmigen Hüllen (6) mit einer pastösen Masse, insbesondere von Darmraupen mit Wurstbrät,
- einer Vorrichtung (2) zum Abteilen von schlauchförmigen mit der pastösen Masse gefüllten Hüllen (4) nach einem der Ansprüche 1 bis 11,
- und vorzugsweise mit mindestens einer Darm-Beladeeinheit (112) für geraffte Hüllen mit zwei relativ zueinander beweglich gehaltenen Greifelementen (124, 124').

## Claims

1. Apparatus for dividing up tubular cases which are filled with a pasty material, in particular a sausage casing filled with sausagemeat, comprising
- two circulating transport elements (8, 8') arranged on mutually opposite sides of the case (4), wherein the transport elements (8, 8') respectively include one or more dividing elements (10, 10'), and
- at least one drive device for the transport elements (8, 8'),
wherein the dividing elements are so arranged at the transport elements (8, 8') and the transport elements (8, 8') are so guided along the case (4) that only one pair of dividing elements can be simultaneously brought into engagement with the case (4),
**characterised in that** the transport elements (8, 8') have two direction-changing elements (20, 20')
wherein the axes of rotation of the two direction-changing elements (20, 20') for the respective transport element (8, 8') extend in a common plane, and
wherein the plane is oriented inclinedly at an angle relative to the conveyor direction (14) of the tubular cases, such that the transport elements (8, 8') are respectively associated with only one of their direction-changing regions (18, 18') with the case (4) to be transported.

2. Apparatus as set forth in claim 1
**characterised in that** the drive device for the transport elements (8, 8', 22,22') is adapted to vary the speed of the transport elements (8, 8', 22, 22) with the dividing element (10, 10') when the dividing elements (10, 10') are out of engagement with the case or are brought into engagement with and/or out of engagement from the case (4).

3. Apparatus as set forth in claim 1 or claim 2
**characterised in that** the drive device for the transport elements (8, 8', 22, 22') is adapted to speed up or slow down the speed of the transport elements (8, 8', 20, 20') in relation to the conveyor speed of the tubular case.

4. Apparatus as set forth in claims 1 through 3
**characterised in that** the transport elements (8, 8', 22, 22') are respectively coupled to at least one drive roller for a respective transport element.

5. Apparatus as set forth in claims 1 through 4
**characterised in that** the transport elements (8, 8',') are guided in their direction-changing regions along a path of movement extending substantially parallel to the case (4).

6. Apparatus as set forth in claims 1 through 5
**characterised by** a control device which is connected in signal-conducting relationship to the drive device and which is adapted to actuate the drive device in dependence on the length of the string portions (6) to be produced at the case (4).

7. Apparatus as set forth in claims 1 through 6
**characterised in that** arranged at the transport elements (8, 8'22, 22') are a plurality of guide parts (12, 12') in adjacent relationship between two dividing elements (10, 10') or in adjacent relationship beside the one dividing element at the transport element (8, 8'22, 22').

8. Apparatus as set forth in claims 1 through 7
**characterised in that** the transport element (8, 8'22, 22') has a conveyor belt or a conveyor chain at which the dividing elements (10, 10') and/or guide parts (12, 12') are arranged at a mutual spacing.

9. Apparatus as set forth in claims 1 though 8
**characterised in that** the dividing elements (10, 10') and/or guide parts (12, 12') are reversibly coupleably secured to the transport elements (8, 8'22, 22').

10. Apparatus as set forth in claims 1 through 9
**characterised in that** the dividing elements (10, 10') of a pair of dividing elements have dividing portions (26) which are arranged in mutually interlaced relationship.

11. Apparatus as set forth in claims 1 through 10
**characterised by** at least one conveyor device (28) having two conveyor elements (30), that is disposed downstream of the pair of transport elements.

12. A machine (100) for producing sausages of pasty material, in particular sausagemeat, comprising
- a filling hopper (102) for receiving the pasty material,
- a conveyor pump for conveying the pasty material,
- a filling device (112) for filling tubular cases (6) with a pasty material, in particular gathered sausage casings with sausagemeat,
- an apparatus (2) for dividing up tubular cases (4) filled with the pasty material as set forth in one of claims 1 through 11, and
- preferably at least one casing loading unit (112) for gathered cases having two gripping elements (124, 124') which are held moveably relative to each other.

## Revendications

1. Dispositif de séparation de manchons tubulaires, lesquels sont remplis d'une matière pâteuse, en particulier d'un boyau rempli de chair à saucisse, avec
- deux éléments de transport (8, 8') circulant en périphérie, disposés sur des côtés opposés du manchon (4), dans lequel les éléments de transport (8, 8') comprennent respectivement un ou plusieurs éléments de séparation (10, 10'), et
- au moins un système d'entraînement pour les éléments de transport (8, 8'), dans lequel les éléments de séparation sont disposés au niveau des éléments de transport (8, 8') de telle sorte et les éléments de transport (8, 8') sont guidés de telle manière le long du manchon (4) que seulement une paire d'éléments de séparation peut être amenée en prise simultanément avec le manchon (4),
**caractérisé en ce**
**que** les éléments de transport (8, 8') présentent deux éléments de renvoi (20, 20'),
dans lequel les axes de rotation des deux éléments de renvoi (20, 20') pour l'élément de transport (8, 8') respectif s'étendent dans un plan commun, et
dans lequel le plan est orienté selon un angle de manière inclinée par rapport à la direction de convoyage (14) des manchons tubulaires de sorte que les éléments de transport (8, 8') sont associés respectivement par seulement une de leurs zones de renvoi (18, 18') au manchon (4) à transporter.

2. Dispositif selon la revendication 1,
**caractérisé en ce que** le système d'entraînement pour les éléments de transport (8, 8', 22) est mis au point pour faire varier la vitesse des éléments de transport (8, 8', 22) avec l'élément de séparation (10, 10') quand les éléments de séparation (10, 10') ne sont pas en prise avec le manchon ou sont amenés en prise avec et/ou sont amenés hors prise du manchon (4).

3. Dispositif selon la revendication 1 ou 2,
**caractérisé en ce que** le système d'entraînement pour les éléments de transport (8, 8', 22) est mis au point pour accélérer ou pour ralentir la vitesse des éléments de transport (8, 8', 22) en rapport avec la vitesse de convoyage du manchon tubulaire.

4. Dispositif selon la revendication 1 à 3,
**caractérisé en ce que** les éléments de transport (8, 8', 22) sont couplés respectivement à au moins un rouleau d'entraînement pour un élément de transport respectif.

5. Dispositif selon la revendication 1 à 4,
**caractérisé en ce que** les éléments de transport (8, 8') sont guidés dans leurs zones de renvoi le long d'une trajectoire de déplacement s'étendant sensiblement de manière parallèle par rapport au manchon (4).

6. Dispositif selon la revendication 1 à 5,
**caractérisé par** un système de commande relié avec acheminement de signaux au système d'entraînement, lequel est mis au point pour piloter le système d'entraînement en fonction de la longueur des sections de boudin (6) à générer au niveau du manchon (4).

7. Dispositif selon la revendication 1 à 6,
**caractérisé en ce qu'**une pluralité de parties de guidage (12, 12') sont disposées au niveau des éléments de transport (8, 8', 22, 22') de manière adjacente entre deux éléments de séparation (10, 10') ou de manière adjacente à côté d'un élément de séparation au niveau de l'élément de transport (8, 8', 22, 22').

8. Dispositif selon la revendication 1 à 7,
**caractérisé en ce que** l'élément de transport (8, 8', 22, 22') présente une bande de convoyage ou une chaîne de convoyage, au niveau de laquelle les éléments de séparation (10, 10') et/ou parties de guidage (12, 12') sont disposés à distance les uns par rapport aux autres.

9. Dispositif selon la revendication 1 à 8,
**caractérisé en ce que** les éléments de séparation (10, 10') et/ou parties de guidage (12, 12') sont fixés de manière à pouvoir être couplés de manière réversible au niveau des éléments de transport (8, 8', 22, 22').

10. Dispositif selon la revendication 1 à 9,
**caractérisé en ce que** les éléments de séparation (10, 10') d'une paire d'éléments de séparation présentent des sections de séparation (26), qui sont disposées de manière entrelacée les unes par rapport aux autres.

11. Dispositif selon la revendication 1 à 10,
**caractérisé par** au moins un système de convoyage (28) installé en aval de la paire d'éléments de transport avec deux éléments de convoyage (30).

12. Machine (100) pour fabriquer des saucisses à partir de masse pâteuse, en particulier de chair à saucisse, avec
- une trémie de remplissage (102) pour recevoir la matière pâteuse,
- une pompe de convoyage pour convoyer la matière pâteuse, et
- un dispositif de remplissage (112) pour remplir des manchons (6) tubulaires avec une matière pâteuse, en particulier des boyaux froncés avec de la chair à saucisse,
- un dispositif (2) pour diviser des manchons (4) tubulaires remplis de la matière pâteuse selon l'une quelconque des revendications 1 à 11,
- et de préférence avec au moins une unité de chargement de boyau (112) pour des manchons étirés avec deux éléments de préhension (124, 124') maintenus de manière mobile l'un par rapport à l'autre.
